# EUROPÄISCHE PATENTSCHRIFT

(11) **EP 2 172 071 B1**
(45) Veröffentlichungstag und Bekanntmachung des Hinweises auf die Patenterteilung: **28.10.2015**
(21) Anmeldenummer: 08774358.9
(22) Anmeldetag: 26.06.2008
(51) Int. Cl.: H04W 36/18

(54) **VERFAHREN ZUR ÜBERTRAGUNG VON DATEN IN EINEM DRAHTLOSEN FUNKNETZ**
METHOD FOR TRANSMITTING DATA IN A WIRELESS RADIO NETWORK
PROCÉDÉ DE TRANSMISSION DE DONNÉES DANS UN RÉSEAU SANS FIL

(30) Priorität: 27.07.2007 DE 102007035186
(43) Veröffentlichungstag der Anmeldung: 07.04.2010
(73) Patentinhaber: Siemens Aktiengesellschaft, 80333 München (DE)
(72) Erfinder: SCHWINGENSCHLÖGL, Christian, 85640 Putzbrunn (DE); GRUBER, Claus, 80336 München (DE); KUTSCHENREUTER, Matthias, 80809 München (DE); ZILLER, Andreas, 81827 München (DE)
(86) Internationale Anmeldenummer: PCT/EP2008/058181
(87) Internationale Veröffentlichungsnummer: WO 2009/015953

(56) Entgegenhaltungen:
- EP-A- 0 618 688
- EP-A- 1 601 136
- WO-A-2007/056519
- WO-A1-2007/063168
- US-A- 5 914 948
- US-A1- 2004 029 602
- IEEE 802.11: "Joint SEE-Mesh/Wi-Mesh Proposal to 802.11 TGs" IEEE 80.11-06/0328R0, [Online] 28. Februar 2006 (2006-02-28), Seiten 1-165, XP002504090 Gefunden im Internet: URL:https://mentor.ieee.org/802.11/documen ts?n=4&x_options=0&x_group=000s&x_year=200 6> [gefunden am 2008-11-12]

## Beschreibung

Die Erfindung betrifft ein Verfahren zur Übertragung von Daten in einem drahtlosen Funknetz mit einer Vielzahl von Basisstationen zum drahtlosen Senden und Empfangen von Daten.

Drahtlose Funknetze, insbesondere nicht-zelluläre Systeme gemäß dem WLAN-Standard IEEE 802.11 bzw. 802.16, werden heutzutage in einer Vielzahl von technischen Anwendungsgebieten eingesetzt. Insbesondere werden solche Netze auch zum Datenaustausch mit mobilen Stationen verwendet, welche sich mit hohen Geschwindigkeiten bewegen, wie z.B. Kraftfahrzeuge oder Schienenfahrzeuge. Solche Funknetze werden dabei beispielsweise für die Multimedia-Kommunikation eingesetzt. Es ist wünschenswert, solche drahtlosen Funksysteme auch für sicherheitskritische Kommunikationsanwendungen zu verwenden. Ein Beispiel einer solchen sicherheitskritischen Anwendung ist die Steuerung eines Zuges über das Funknetz, beispielsweise um dem Zug Befehle bzw. Signale zur Steuerung und Überwachung des Zugs durch das drahtlose Funknetz zu übermitteln.

In sicherheitskritischen Anwendungen müssen drahtlose Funknetze sehr hohe Verlässlichkeitsanforderungen erfüllen, insbesondere muss das verwendete Funknetz redundant ausgestaltet sein und die Reaktionszeiten bei Ausfällen müssen sehr gering sein, um beispielsweise Notstopps zu vermeiden, welche bei Zügen auftreten, falls der Zug keine Verbindung zu einem entsprechenden zentralen Steuersystem für eine vorbestimmte Zeit, beispielsweise für mehr als 0,3 s, herstellen kann.

Funknetze nach den heutigen Standards eignen sich nicht zur Verwendung bei sicherheitsbasierten Anwendungen, da bei einer sich bewegenden mobilen Station die Zeitdauer für sog. Handoffs (d.h. die Neuzuordnung einer mobilen Station zu einer neuen Basisstation, wenn die mobile Station außer Reichweite der alten Basisstation ist) mit hohen Verzögerungen verbunden ist. In dem WLAN-Standard 802.11r benötigen Handoffs mehrere Millisekunden, was für eine sicherheitskritische Kommunikation nicht tolerabel ist.

Zur Minimierung der Verzögerungen bei Handoffs wurden nichtstandardisierte proprietäre Systeme entwickelt, welche jedoch andere Probleme aufweisen. Insbesondere besteht bei diesen Systeme die sehr große Gefahr, dass durch die Optimierung standardisierter Sicherheitsmechanismen neue, bisher nicht bekannte Sicherheitsprobleme auftreten können. Eine Verbesserung kann ferner durch Optimierungen auf höheren Schichten gemäß des OSI-Referenzmodells erreicht werden. Jedoch wird durch diese Optimierungen auch nicht das grundlegende Problem einer auftretenden Verzögerung durch Handoffs auf der L2-Schicht behoben.

Die Druckschrift US 2004/0029602 A1 offenbart ein Verfahren zur Übertragung von Daten in einem drahtlosen Funknetz, umfassend eine mobile Station und eine Mehrzahl von Basisstationen. Dabei werden Daten zwischen benachbarten Basisstationen über direkte Funkverbindung zwischen diesen Basisstationen übermittelt.

In dem Dokument US 5 914 948 ist eine drahtlose Datenübertragung zwischen einer mobilen Station auf einem Schienenfahrzeug und entsprechenden Basisstationen entlang des Verkehrswegs des Schienenfahrzeugs beschrieben. Zur Kommunikation mit der mobilen Station verwenden alle Basisstationen die gleichen Trägerfrequenzen.

Aus der WO 2007/063168 A1 ist ein Funksystem zur Kommunikation zwischen einem Schienenfahrzeug und Basisstationen bekannt, bei dem zur Überbrückung des Handoffs auf dem Schienenfahrzeug zwei Sende-/Empfangsgeräte vorgesehen sind.

Aufgabe der Erfindung ist es, ein Verfahren zur Übertragung von Daten in einem drahtlosen Funknetz zu schaffen, welches derart geringe Verzögerungen bei der Datenübertragung aufweist, das es für sicherheitskritische Anwendungen eingesetzt werden kann.

Diese Aufgabe wird durch die unabhängigen Patentansprüche gelöst. Weiterbildungen der Erfindung sind in den abhängigen Ansprüchen definiert.

In dem erfindungsgemäßen Verfahren wird ein Funknetz eingesetzt, welches eine Vielzahl von drahtlos vernetzten Basisstationen umfasst, wobei die Vernetzung der Basisstationen derart ausgestaltet ist, dass jede Basisstation mit einer oder mehreren benachbarten Basisstationen drahtlos kommunizieren kann. Der Begriff "Basisstation" ist hierbei weit auszulegen und umfasst in einem Funknetz jede stationäre Einheit, welche in dem Funknetz drahtlos Daten empfangen und aussenden kann. In einer bevorzugten Ausführungsform wird zur Datenübertragung ein nicht-zelluläres lokales Funknetz verwendet, insbesondere das bereits oben erwähnte WLAN-Netz (WLAN = Wireless Local Area Network). Bei der Verwendung solcher Netze sind die Basisstationen gleichzusetzen mit Zugangspunkten (englisch: Access Points) eines solchen lokalen Funknetzes. In der Erfindung wird vorzugsweise ein WLAN-Netz gemäß dem Standard IEEE 802.11 bzw. 802.16 eingesetzt (IEEE = Institute of Electrical and Electronics Engineers). Die soeben beschriebene Vernetzung der Basisstationen erfolgt vorzugsweise gemäß der Spezifikation IEEE 802.11s.

Das erfindungsgemäße Verfahren zeichnet sich durch eine Datenübertragung aus, bei der zwischen einer mobilen Station zum drahtlosen Senden und/oder Empfangen von Daten und den Basisstationen zumindest teilweise Broadcast-Nachrichten zur drahtlosen Informationsübermittlung verwendet werden. Unter einer Broadcast-Nachricht ist hierbei eine Nachricht zu verstehen, welche von der mobilen Station und den Basisstationen unabhängig vom Sendeort der Nachricht verarbeitet werden kann. Einer Broadcast-Nachricht ist insbesondere keine Kommunikationsverbindung zwischen zwei Knoten/Einheiten in dem Funknetz zugeordnet. Der Informationsinhalt in der Broadcast-Nachricht kann somit von einer mobilen Station, die diese Nachricht von einer Basisstation in Funkreichweite zur mobilen Station empfängt, immer verarbeitet werden, und zwar unabhängig davon, von welcher Basisstation die Nachricht stammt. Ebenso können die Basisstationen von ihnen empfangene Broadcast-Nachrichten geeignet verarbeiten. Die Basisstationen extrahieren dabei nicht den Inhalt der Broadcast-Nachricht, sondern sie leiten die empfangenen Broadcast-Nachrichten weiter. Das heißt, eine Basisstation, welche eine Broadcast-Nachricht empfängt, sendet die Broadcast-Nachricht wieder aus. Auf diese Weise wird ein Relay-Netz durch die Basisstationen geschaffen, so dass Informationen durch den Weiterleitungs-Mechanismus der Basisstationen zu der mobilen Station gelangen können bzw. von der mobilen Station in das Funknetz eingespeist werden können. Dabei teilen die Basisstationen in Reichweite zur mobilen Station ihren benachbarten Basisstationen ferner Informationen bezüglich der verwendeten Funkverbindung zwischen der mobilen Station und den Basisstationen in Reichweite zur mobilen Station mit. Diese Informationen umfassen insbesondere die Information, auf welchem Funkkanal die Datenübertragung zwischen zur mobilen Station und den Basisstationen in Reichweite der mobilen Station erfolgt. Auf diese Weise wird sichergestellt, dass bei der Bewegung der mobilen Station in die Reichweite einer neuen, zur vorhergehenden Basisstation benachbarten Basisstation immer der richtige Funkkanal eingestellt werden kann. Dies wird dadurch erreicht, dass die Basisstationen, welche zu den Basisstationen in Reichweite zur mobilen Station benachbart sind, den in den Informationen bezüglich der Funkverbindung enthaltenen Funkkanal einstellen, wenn sie feststellen, dass sie sich in Reichweite zur mobilen Station befinden.

Durch die Verwendung der soeben beschriebenen Broadcast-Nachrichten ist es erfindungsgemäß nicht mehr notwendig, dass sog. Handoffs zur Zuordnung einer neuen Basisstation zu der mobilen Station durchgeführt werden, wenn sich die mobile Station aus der Reichweite der früheren Basisstation bewegt. Es kommt somit zu keinen längeren Ausfällen der Datenverbindung zwischen mobiler Station und restlichem Funknetz, so dass sich das Verfahren zum Einsatz für sicherheitskritische Anwendungen eignet.

In einer bevorzugten Ausführungsform des erfindungsgemäßen Verfahrens werden Daten zwischen einer zentralen Einheit, beispielsweise einer Steuereinheit für die mobile Station, und der mobilen Station über das drahtlose Funknetz übertragen, wobei die zentrale Einheit zumindest eine Kommunikationsverbindung zu einer oder mehreren Basisstationen des Funknetzes aufweist. Diese Kommunikationsverbindung muss nicht zwangsläufig drahtlos sein, sondern sie kann auch drahtgebunden ausgestaltet sein. Die entsprechenden, zu übermittelnden Informationen werden über diese Kommunikationsverbindung in das Funknetz eingespeist und von dort mittels der oben beschriebenen Broadcast-Nachrichten weitergeleitet. Ebenso gelangen Informationen von einer mobilen Einheit, welche in das Funknetz Broadcast-Nachrichten aussendet, über diese Kommunikationsverbindung hin zu der zentralen Einheit.

In einer Ausführungsform der Erfindung sind in der zentralen Einheit Informationen bezüglich der Funkverbindungen zwischen den Basisstationen untereinander und zwischen der mobilen Station und der oder den Basisstationen in Reichweite zur mobilen Station hinterlegt, insbesondere die Kanäle der verwendeten Funkverbindungen. Auf diese Informationen können dann die Basisstationen zurückgreifen, um sicherzustellen, dass die Broadcast-Nachrichten in Reichweite zur mobilen Station immer auf einem Kanal gesendet werden, auf dem die mobile Station auch empfängt. Ebenso wird sichergestellt, dass benachbarte Basisstationen auf dem gleichen Kanal senden, so dass die Weiterleitung der Broadcast-Nachrichten gewährleistet ist.

Wie bereits oben erwähnt, eignet sich die Erfindung insbesondere zum Einsatz in sicherheitskritischen Anwendungen, beispielsweise in einem Verkehrssystem, bei dem die mobile Station ein sich auf einem Verkehrsweg bewegendes Verkehrsmittel mit einer oder mehreren Antennen zur Kommunikation mit dem Funknetz darstellt, wobei die Basisstationen des Funknetzes in Abständen entlang des Verkehrswegs positioniert sind. Der Abstand der Basisstationen ist hierbei derart gewählt, dass ein sich auf dem Verkehrsweg bewegendes Verkehrsmittel immer in Reichweite einer Basisstation ist und es somit nicht zu Kommunikationsunterbrechungen kommt. Ein besonderer Anwendungsbereich der Erfindung ist der Einsatz in einem Schienenverkehrssystem, wobei der Verkehrsweg in diesem Fall ein Schienenweg ist und das Verkehrsmittel ein Schienenfahrzeug darstellt, insbesondere einen Zug zum Transport von Passagieren bzw. Gütern.

Bei der Verwendung der Erfindung in einem Verkehrssystem ist die im Vorangegangenen beschriebene zentrale Einheit vorzugsweise eine Steuereinheit des Verkehrssystems, mit der beispielsweise die Steuerung eines Zugs ohne menschlichen Schaffner ermöglicht werden kann.

In einer weiteren Ausführungsform des erfindungsgemäßen Verfahrens können die Basisstationen des Funknetzes über von der mobilen Station ausgesendete Broadcast-Nachrichten feststellen, ob sie in Reichweite zur mobilen Station sind. Diese Broadcast-Nachrichten können hierbei die im Vorangegangenen beschriebenen Broadcast-Nachrichten sein, welche zur Datenübertragung verwendet werden. Jedoch ist es auch möglich, dass die von der mobilen Station ausgesendeten Broadcast-Nachrichten nicht zur Informationsübertragung dienen, sondern lediglich zur Ortung des Zugs eingesetzt werden. In diesem Fall stellen die Broadcast-Nachrichten sog. Beacons dar, deren Reichweite größer ist als von den Broadcast-Nachrichten, welche auch die zu übertragenden Daten enthalten.

In einer weiteren Ausgestaltung des erfindungsgemäßen Verfahrens übermitteln die Basisstationen in ihren ausgesendeten Broadcast-Nachrichten ferner lokale Informationen betreffend das Umfeld der jeweiligen Basisstation. Solche Informationen können auftretende Gefahren betreffen, beispielsweise könnte mit einem Sensor erfasst werden, ob sich Objekte auf einem Abschnitt des Verkehrswegs befinden, den die mobile Station abfährt. Zur Verringerung der übertragenen Datenmenge übermitteln die Basisstationen diese lokalen Informationen vorzugsweise nur dann, wenn sie sich in Reichweite zur mobilen Station befinden, was beispielsweise über die oben erwähnten Beacons ermittelt werden kann.

Eine besonders einfache Realisierung des erfindungsgemäßen Verfahrens kann dadurch erreicht werden, dass die Basisstationen und die mobile Station auf dem gleichen Funkkanal senden und/oder empfangen. In diesem Fall muss in dem Funknetz keine Überprüfung der Kanäle dahingehend erfolgen, dass die Basisstationen bzw. die mobile Station immer auf einen geeigneten Funkkanal eingestellt sind, so dass die Weiterleitung der Broadcast-Nachrichten zwischen den Basisstationen bzw. der Austausch dieser Nachrichten zwischen mobiler Station und einer entsprechenden Basisstation gewährleistet ist.

In einer weiteren Ausgestaltung des erfindungsgemäßen Verfahrens weist zumindest ein Teil der Basisstationen ferner drahtgebundene Verbindungen auf, wobei Broadcast-Nachrichten auch über die drahtgebundenen Verbindungen weitergeleitet werden. In diesem Fall wird die Skalierbarkeit und Redundanz des Systems erhöht, da beim Ausfall einer drahtlosen Verbindung auch auf die drahtgebunden übermittelten Broadcast-Nachrichten zurückgegriffen werden kann. Der Informationsinhalt dieser drahtgebundenen Broadcast-Nachrichten ist hierbei der gleiche wie der drahtlos übermittelten Broadcast-Nachrichten.

In einer weiteren Ausgestaltung des erfindungsgemäßen Verfahrens werden aus dem Stand der Technik bekannte Network-Coding-Verfahren zur Datenübertragung verwendet, wobei mit diesen Techniken eine optimierte Datenübertragung hinsichtlich Redundanz bzw. Datenrate erreicht werden kann.

Neben dem oben beschriebenen Verfahren umfasst die Erfindung ferner ein Funknetz, das derart ausgestaltet ist, dass jede Variante des oben beschriebenen erfindungsgemäßen Verfahrens mit dem Funknetz ausgeführt werden kann.

Ausführungsbeispiele der Erfindung werden nachfolgend anhand der beigefügten Figur detailliert beschrieben.

Es zeigt:

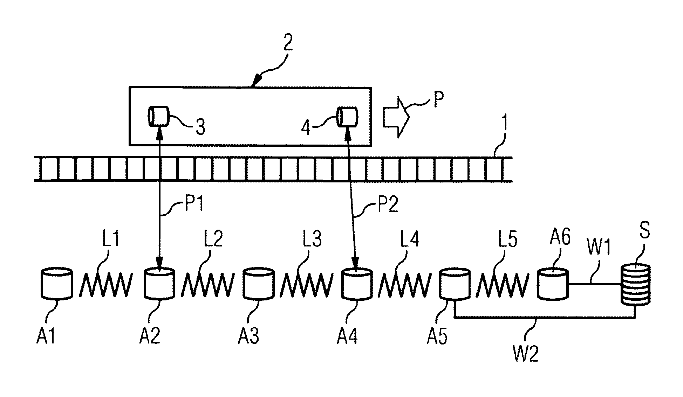

- Fig. 1: eine schematische Darstellung eines Funknetzes, in dem eine Ausführungsform des erfindungsgemäßen Verfahrens durchgeführt wird.

Fig. 1 zeigt ein Schienenverkehrssystem mit einer Schienenspur 1, auf der sich Schienenfahrzeuge in der Form von Zügen bewegen können. In Fig. 1 ist ein sich nach rechts bewegendes mobiles Objekt in der Form eines Zugs durch das Bezugszeichen 2 angedeutet, wobei die Bewegungsrichtung des Zugs durch den Pfeil P wiedergegeben ist. Entlang der Schienenspur sind in regelmäßigen Abständen Zugangspunkte eines WLAN-Netzes angeordnet, wobei vorzugsweise ein WLAN-Netz nach dem Standard IEEE 802.11 oder 802.16 verwendet wird. Im Beispiel der Fig. 1 sind sechs Zugangspunkte A1, A2, A3, A4, A5 und A6 gezeigt, welche derart positioniert sind, dass jeder Zugangspunkt zumindest mit seinem nächsten Nachbarn drahtlos kommunizieren kann. Die drahtlosen Kommunikationsverbindungen zwischen den Zugangspunkten sind in Fig. 1 schematisch durch Zick-Zack-Linien L1, L2, L3, L4 und L5 angedeutet. Vorzugsweise weist ein Zugangspunkt nicht nur zu seinem nächsten Nachbarn, sondern auch zu weiteren Nachbarn eine Kommunikationsverbindung auf, wodurch die Fehleranfälligkeit des System reduziert wird. Insbesondere kann beispielsweise jeder Zugangspunkt zu seinem nächsten und übernächsten Nachbarn in beide Richtungen des Schienenwegs eine Kommunikationsverbindung aufweisen bzw. herstellen. Das Netz, welches durch die Kommunikationsverbindungen zwischen den Zugangspunkten gebildet wird, kann beispielsweise auf der Basis des Standards IEEE 802.11s erzeugt werden.

In dem Beispiel der Fig. 1 soll eine drahtlose Steuerung des Zugs 2 mit Hilfe eines zentralen Servers S vorgenommen werden. Der Server ist hierbei über zwei drahtgebundene Verbindungen W1 und W2 zum einen mit dem Zugangspunkt A6 und zum anderen mit dem Zugangspunkt A5 verbunden. Der Server erzeugt insbesondere Steuerbefehle für die Fahrt des Zugs, welche an den Zug zu übermitteln sind. Ebenso kann der Server zum Empfang von Kontrollinformationen vom Zug ausgelegt sein. Ein Anwendungsbereich ist beispielsweise ein führerloses Steuern des Zuges 2 auf dem Schienenweg 1.

Die Übermittlung von Informationen zwischen Server und Zug erfolgt erfindungsgemäß drahtlos über Broadcast-Nachrichten, d.h. über Nachrichten, die keiner festen Verbindung zwischen zwei Einheiten im Netz zugeordnet sind. Wird beispielsweise ein Steuerbefehl vom Server S an den Zug 2 übermittelt, erfolgt zunächst die Einspeisung der entsprechenden Broadcast-Nachricht über die Zugangspunkte A5 und A6 in das drahtlose Funknetz. Das Funknetz ist dabei derart ausgestaltet, dass es als sog. Relay-Netz fungiert, bei dem jeder Zugangsknoten eine von ihm empfangene Broadcast-Nachricht wieder aussendet. Hierdurch wird erreicht, dass sich die Broadcast-Nachricht, welche den entsprechenden Steuerbefehl enthält, in das gesamte Netz zwischen allen Zugangspunkten A1 bis A6 verteilt. Der Zug 2 weist zwei Sende- und Empfangs-Antennen 3 und 4 auf, mit denen die Broadcast-Nachrichten empfangen werden können, welche von den Zugangspunkten, in deren Funkreichweite Antenne 3 bzw. 4 liegt, ausgesendet wurden. Im Beispiel der Fig. 1 empfängt die Antenne 3 die Broadcast-Nachricht von dem Zugangspunkt A2, wohingegen die Antenne 4 die Broadcast-Nachricht von dem Zugangspunkt A4 empfängt. Dies ist mit den Doppelpfeilen P1 und P2 in Fig. 1 angedeutet. Durch die Verwendung von zwei Antennen wird hierbei die Redundanz des Systems und somit die Fehleranfälligkeit vermindert.

Aufgrund der Verwendung von Broadcast-Nachrichten besteht keine eindeutige Assoziation der Antenne 3 bzw. 4 mit einem entsprechenden Zugangspunkt in dem Funknetz. Dies bedeutet, dass auch kein zeitaufwändiger Handoff erforderlich ist, wenn sich der Zug bei seiner Bewegung aus der Reichweite eines Zugangspunkts entfernt und in die Reichweite eines neuen Zugangspunkts gelangt. Erfindungsgemäß ist ein solcher Handoff deshalb nicht erforderlich, weil die Antennen 3 und 4 auf dem Zug die Broadcast-Signale immer verarbeiten können, und zwar unabhängig davon, von welchem Zugangspunkt die Signale stammen.

In einer bevorzugten Variante des erfindungsgemäßen Verfahrens besteht ferner die Möglichkeit, dass die Zugangspunkte A1 bis A6 ermitteln, ob sich ein Zug in ihrer Reichweite befindet. Dies kann beispielsweise dadurch erfolgen, dass die Antennen 3 und 4 des Zugs 2 kontinuierlich sog. Beacons aussenden, so dass ein Zugangspunkt, der solche Beacons empfängt, hierdurch feststellen kann, dass er sich in der Reichweite zum Zug befindet. Hierdurch wird beispielsweise die Möglichkeit geschaffen, dass Zugangspunkte, welche sich in der Reichweite zum Zug befinden, zusätzlich lokale Informationen im Umkreis des entsprechenden Zugangspunkts mit der Broadcast-Nachricht aussenden, um den Zug beispielsweise über lokale Gefahren zu informieren. Eine solche Gefahr könnte ein Objekt auf der Schiene sein, welches von dem entsprechenden Zugangspunkt durch zusätzliche Sensoren erfasst wurde. Sollten die einzelnen Zugangspunkte nicht immer auf den gleichen Kanälen Broadcast-Nachrichten übertragen, könnte die Information, welche Zugangspunkte in der Reichweite zu den Antennen des Zugs liegen, auch dazu verwendet werden, dass der Zugangspunkt in Reichweite zum Zug seinen benachbarten Zugangspunkten den Kanal mitteilt, über den der Datenaustausch zu den Antennen des Zugs erfolgt. Wenn dann ein Nachbarknoten feststellt, dass er in der Reichweite zur Antenne des Zugs liegt, schaltet dieser Nachbarknoten dann auf diesen Kanal, um somit den Datenaustausch von Broadcast-Nachrichten zwischen Zug und Funknetz zu gewährleistet.

Wie sich aus den obigen Ausführungen ergibt, wird erfindungsgemäß eine sog. Broadcast-Wolke geschaffen, welche durch die Zugangspunkte in Reichweite zu den Antennen eines sich bewegenden Zugs definiert ist, wobei diese Broadcast-Wolke der Bewegung des Zugs folgt. In einer bevorzugten Variante können ferner sog. Network-Coding-Techniken zur effizienten Datenübertragung eingesetzt werden. Solche Network-Coding-Techniken sind hinlänglich aus dem Stand der Technik bekannt. Beispiele sind Cope oder Avalanche. Durch die Verwendung solcher Techniken kann eine Redundanz bei der Informationsübertragung erreicht werden, wodurch die Fehleranfälligkeit des Systems vermindert wird.

Das soeben beschriebene erfindungsgemäße Verfahren weist eine Reihe von Vorteilen auf. Insbesondere wird durch die Verwendung eines drahtlosen Funknetzes die Menge an Verkabelung vermindert, so dass solche Netze leichter installiert und gewartet werden können. Die Verfügbarkeit des Gesamtnetzes wird verbessert, da das verwendete Funknetz eine Fehlerwahrscheinlichkeit aufweist, die geringer ist als bei der Verwendung von Kabeln. Ein weiterer entscheidender Vorteil des oben beschriebenen Funknetzes besteht darin, dass keine Handoff-Verzögerungen bei der Bewegung eines mobilen Objekts auftreten, da die Funkverbindungen nicht als Unicast-Verbindungen behandelt werden. Somit muss sich ein mobiles Objekt nicht mit bestimmten Zugangspunkten assoziieren, wie dies im Stand der Technik der Fall ist. Stattdessen empfängt das Objekt die adaptive, sich mit der Bewegung des Objekts mitbewegende Broadcast-Wolke und liest aus dieser Wolke die darin enthaltenen Informationen aus. Darüber hinaus müssen in dem erfindungsgemäßen Funknetz keine Umschaltungen bei Ausfall von Zugangspunkten vorgenommen werden. Im Fall des Ausfalls eines Zugangspunkts bzw. einer Kommunikationsverbindung zwischen zwei Zugangspunkten muss kein Backup-System oder eine Neukonfiguration des Systems vorgenommen werden. Sofern jeder Zugangspunkt nämlich redundante drahtlose Kommunikationsverbindungen zu anderen Zugangspunkten aufweist, wird die Datenverbindung bei Ausfall einer Kommunikationsverbindung über diese drahtlose Kommunikationsverbindung aufrecht erhalten. Wie bereits oben erwähnt, können in dem erfindungsgemäßen System ferner Network-Coding-Techniken eingesetzt werden, um die Fehleranfälligkeit zu reduzieren bzw. auch drahtlose Kommunikationsverbindungen mit niedriger Zuverlässigkeit zur Übertragung zu verwenden.

## Patentansprüche

1. Verfahren zur Übertragung von Daten in einem drahtlosen Funknetz mit einer Vielzahl von Basisstationen (A1, A2, ..., A6) zum drahtlosen Senden und Empfangen von Daten, wobei die Basisstationen (A1, A2, ..., A6) drahtlos derart vernetzt sind, dass jede Basisstation (A1, A2, ..., A6) mit einer oder mehreren benachbarten Basisstationen (A1, A2, ..., A6) drahtlos kommunizieren kann, wobei eine Datenübertragung zwischen einer mobilen Station (2) zum drahtlosen Senden und/oder Empfangen von Daten und den Basisstationen (A1, A2, ..., A6) zumindest teilweise mittels drahtlos übermittelter Broadcast-Nachrichten erfolgt, wobei Broadcast-Nachrichten von den Basisstationen (A1, A2, ..., A6) derart weitergeleitet werden, dass eine Basisstation (A1, A2, ..., A6), welche eine Broadcast-Nachricht empfängt, diese Broadcast-Nachricht wieder aussendet,
**dadurch gekennzeichnet,**
**dass** Broadcast-Nachrichten zwischen der mobilen Station (2) und wenigstens einer Basisstation (A1, A2, ..., A6) in Reichweite zur mobilen Station (2) ausgetauscht werden und die Basisstation oder Basisstationen (A1, A2, ..., A6) in Reichweite zur mobilen Station (2) ihren benachbarten Basisstationen ferner Informationen bezüglich der verwendeten Funkverbindung zwischen der mobilen Station (2) und den Basisstationen (A1, A2, ..., A6) in Reichweite zur mobilen Station (2) mitteilen, wobei die Informationen bezüglich der Funkverbindung die Information umfassen, auf welchem Funkkanal die Datenübertragung zwischen der mobilen Station (2) und den Basisstationen (A1, A2, ..., A6) in Reichweite zur mobilen Station (2) stattfindet und wobei die zu den Basisstationen (A1, A2, ..., A6) in Reichweite zur mobilen Station (2) benachbarten Basisstationen (A1, A2, ..., A6) den in den Informationen bezüglich der Funkverbindung enthaltenen Funkkanal einstellen, wenn sie feststellen, dass sie sich in Reichweite zur mobilen Station (2) befinden.

2. Verfahren nach Anspruch 1, bei dem zur Datenübertragung ein nicht-zelluläres lokales Funknetz, insbesondere ein WLAN-Netz, eingesetzt wird, wobei die Basisstationen (A1, A2, ..., A6) Zugangspunkte des lokalen Funknetzes sind.

3. Verfahren nach Anspruch 2, bei dem das WLAN-Netz ein Netz gemäß dem Standard IEEE 802.11 und/oder 802.16 ist.

4. Verfahren nach Anspruch 3, bei dem die Vernetzung der Basisstationen (A1, A2, ..., A6) gemäß der Spezifikation IEEE 802.11s erfolgt.

5. Verfahren nach einem der vorhergehenden Ansprüche, wobei in dem Verfahren Daten zwischen einer zentralen Einheit (S) und der mobilen Einheit (2) über das drahtlose Funknetz übertragen werden, wobei die zentrale Einheit (S) zumindest eine Kommunikationsverbindung zu einer oder mehreren Basisstationen (A1, A2, ..., A6) des Funknetzes aufweist.

6. Verfahren nach Anspruch 5, bei dem in der zentralen Einheit (S) Informationen bezüglich der Funkverbindungen zwischen den Basisstationen (A1, A2, ..., A6) untereinander und zwischen der mobilen Station (2) und der oder den Basisstationen (A1, A2, ..., A6) in Reichweite zur mobilen Station (2) hinterlegt werden, insbesondere die Kanäle der verwendeten Funkverbindungen.

7. Verfahren nach einem der vorhergehende Ansprüche, wobei das Verfahren in einem Verkehrssystem eingesetzt wird, bei dem die mobile Station (2) ein sich auf einem Verkehrsweg bewegendes Verkehrsmittel mit einer oder mehreren Antennen (3, 4) zur Kommunikation mit dem Funknetz darstellt und die Basisstationen (A1, A2, ..., A6) in Abständen entlang des Verkehrswegs positioniert sind.

8. Verfahren nach Anspruch 7, bei dem das Verkehrssystem ein Schienenverkehrssystem ist, wobei der Verkehrsweg ein Schienenweg und das Verkehrsmittel ein Schienenfahrzeug, insbesondere ein Zug, ist.

9. Verfahren nach Anspruch 7 oder 8 in Kombination mit Anspruch 5 oder 6, bei dem die zentrale Einheit (S) eine Steuereinheit des Verkehrssystems ist.

10. Verfahren nach einem der vorhergehenden Ansprüche, bei dem die Basisstationen (A1, A2, ..., A6) über von der mobilen Station (2) ausgesendete Broadcast-Nachrichten feststellen, ob sie sich in Reichweite zur mobilen Station (2) befinden.

11. Verfahren nach Anspruch 10, bei dem die von der mobilen Station (2) ausgesendeten Broadcast-Nachrichten, mit denen die Basisstationen (A1, A2, ..., A6) feststellen, ob sie sich in Reichweite zur mobilen Station (2) befinden, Beacons und/oder zur Datenübertragung verwendete Broadcast-Nachrichten sind.

12. Verfahren nach Anspruch 10 oder 11, bei dem die Basisstationen (A1, A2, ..., A6) in ihren ausgesendeten Broadcast-Nachrichten ferner lokale Information betreffend das Umfeld der jeweiligen Basisstation (A1, A2, ..., A6) übermitteln, wobei die lokalen Informationen vorzugsweise ausschließlich von Basisstationen (A1, A2, ..., A6) in Reichweite zur mobilen Station (2) übermittelt werden.

13. Verfahren nach einem der vorhergehenden Ansprüche, bei dem die Basisstationen (A1, A2, ..., A6) und die mobile Station (2) auf dem gleichen Funkkanal senden und/oder empfangen.

14. Verfahren nach einem der vorhergehenden Ansprüche, bei dem zumindest ein Teil der Basisstationen (A1, A2, ..., A6) ferner drahtgebundene Verbindungen aufweist, wobei Broadcast-Nachrichten auch über die drahtgebundenen Verbindungen weitergeleitet werden.

15. Verfahren nach einem der vorhergehenden Ansprüche, bei dem ein Network-Coding-Verfahren zur Datenübertragung verwendet wird.

16. Funknetz nach einem der vorhergehenden Ansprüche, welches derart ausgestaltet ist, dass ein Verfahren nach einem der Ansprüche 2 bis 15 in dem Funknetz durchführbar ist.

## Claims

1. Method for transmitting data in a wireless radio network having a multiplicity of base stations (A1, A2, ..., A6) for wirelessly sending and receiving data, wherein the base stations (A1, A2, ..., A6) are wirelessly networked such that each base station (A1, A2, ..., A6) can communicate wirelessly with one or more adjacent base stations (A1, A2, ..., A6), wherein data is transmitted between a mobile station (2) for wirelessly sending and/or receiving data and the base stations (A1, A2, ..., A6) at least partially by means of wirelessly transmitted broadcast messages, wherein broadcast messages are forwarded by the base stations (A1, A2, ..., A6) such that a base station (A1, A2, ..., A6) which receives a broadcast message re-emits this broadcast message,
**characterised in that**
broadcast messages are exchanged between the mobile station (2) and at least one base station (A1, A2, ..., A6) within range of the mobile station (2) and the base station or base stations (A1, A2, ..., A6) within range of the mobile station (2) also communicate to their adjacent base stations information regarding the radio connection used between the mobile station (2) and the base stations (A1, A2, ..., A6) within range of the mobile station (2), wherein the information regarding the radio connection comprises information as to the radio channel on which data transmission takes place between the mobile station (2) and the base stations (A1, A2, ..., A6) within range of the mobile station (2) and wherein the base stations (A1, A2, ..., A6) adjacent to the base stations (A1, A2, ..., A6) within range of the mobile station (2) adjust the radio channel contained in the information regarding the radio connection when they determine that they are within range of the mobile station (2).

2. Method according to claim 1, in which a non-cellular local radio network, in particular a WLAN network, is used for data transmission, wherein the base stations (A1, A2, ..., A6) are access points to the local radio network.

3. Method according to claim 2, in which the WLAN network is a network conforming to IEEE standard 802.11 and/or 802.16.

4. Method according to claim 3, in which the base stations (A1, A2, ..., A6) are networked in conformance with IEEE specification 802.11s.

5. Method according to one of the preceding claims, wherein in the method data is transmitted between a central unit (S) and the mobile unit (2) via the wireless radio network, wherein the central unit (S) has at least one communication connection to one or more base stations (A1, A2, ..., A6) of the radio network.

6. Method according to claim 5, in which information regarding the radio connections between the base stations (A1, A2, ..., A6) and between the mobile station (2) and the base station or base stations (A1, A2, ..., A6) within range of the mobile station (2), in particular the channels of the radio connections used, is filed in the central unit (S).

7. Method according to one of the preceding claims, wherein the method is used in a traffic system in which the mobile station (2) constitutes a means of transport, moving on a traffic route, having one or more antennae (3, 4) for communicating with the radio network, and the base stations (A1, A2, ..., A6) are positioned at intervals along the traffic route.

8. Method according to claim 7, in which the traffic system is a rail traffic system, wherein the traffic route is a rail route and the means of transport a rail vehicle, in particular a train.

9. Method according to claim 7 or 8 in combination with claim 5 or 6, in which the central unit (S) is a control unit of the traffic system.

10. Method according to one of the preceding claims, in which the base stations (A1, A2, ..., A6) determine via broadcast messages emitted by the mobile station (2) whether they are located within range of the mobile station (2).

11. Method according to claim 10, in which the broadcast messages emitted by the mobile station (2), by means of which the base stations (A1, A2, ..., A6) determine whether they are located within range of the mobile station (2), are beacons and/or broadcast messages used for data transmission.

12. Method according to claim 10 or 11, in which the base stations (A1, A2, ..., A6) also transmit in their emitted broadcast messages local information concerning the environment of the respective base station (A1, A2, ..., A6), wherein the local information is preferably transmitted exclusively by base stations (A1, A2, ..., A6) within range of the mobile station (2).

13. Method according to one of the preceding claims, in which the base stations (A1, A2, ..., A6) and the mobile station (2) send and/or receive on the same radio channel.

14. Method according to one of the preceding claims, in which at least some of the base stations (A1, A2, ..., A6) also have wire-bound connections, wherein broadcast messages are also forwarded via the wire-bound connections.

15. Method according to one of the preceding claims, in which a network coding method is used for transmitting data.

16. Radio network according to one of the preceding claims, which is configured such that a method according to one of claims 2 to 15 can be executed in the radio network.

## Revendications

1. Procédé de transmission de données dans un réseau de radiocommunication sans fil ayant une pluralité de stations ( A1, A2, ...A6 )de base pour l'émission et la réception sans fil de données, les stations ( A1, A2, ...A6 ) de base étant interconnectées sans fil de manière à ce que chaque station ( A1, A2, ...A6 ) de base puisse communiquer sans fil avec plusieurs stations ( A1, A2, ...A6 ) de base voisines, une transmission de données s'effectuant entre une station ( 2 ) mobile pour l'émission et/ou la réception sans fil de données et les stations ( A1, A2, ...A6 ) de base au moins en partie au moyen de messages radiodiffusés transmis sans fil, des messages radiodiffusés étant acheminés par les stations ( A1, A2, ...A6 ) de base de manière à ce qu'une station ( A1, A2, ...A6 ) de base qui reçoit un message radiodiffusé réémette ce message radiodiffusé,
**caractérisé en ce que**
l'on échange des messages radiodiffusés entre la station ( 2 ) mobile et au moins une station ( A1, A2, ...A6 ) de base dans la portée de la station ( 2 ) mobile et la station ou les stations de base ( A1, A2, ...A6 ) comparent, dans la portée de la station ( 2 ) mobile à leurs stations de base voisines, en outre, des informations se rapportant à la communication radioélectrique utilisée entre la station ( 2 ) mobile et les stations ( A1, A2, ...A6 ) de base, dans la portée de la station ( 2 ) mobile, les informations se rapportant à la communication radioélectrique comprenant les informations du canal radioélectrique sur lequel a lieu la transmission de données entre la station ( 2 ) mobile et les stations ( A1, A2, ...A6 ) mobiles dans la portée de la station ( 2 ) mobile et les stations ( A1, A2, ...A6 ) de base voisines des stations ( A1, A2, ...A6 ) de base dans la portée de la station ( 2 ) mobile établissent le canal radioélectrique contenu dans les informations se rapportant à la communication radioélectrique si elles constatent qu'elles se trouvent dans la portée de la station ( 2 ) mobile.

2. Procédé suivant la revendication 1, dans lequel on utilise pour la transmission de données un réseau radioélectrique local non cellulaire, notamment un réseau WLAN, les stations ( A1, A2, ...A6 ) de base étant des points d'accès du réseau radioélectrique local.

3. Procédé suivant la revendication 2, dans lequel le réseau WLAN est un réseau suivant la norme IEEE 802.11 et/ou 802.16.

4. Procédé suivant la revendication 3, dans lequel l'interconnexion des stations ( A1, A2, ...A6 ) de base s'effectue suivant la spécification IEEE 802.11s.

5. Procédé suivant l'une des revendications précédentes, dans lequel on transmet dans le procédé des données entre une unité ( S ) centrale et l'unité ( 2 ) mobile par le réseau radioélectrique sans fil, l'unité ( 8 ) centrale ayant au moins une liaison de communication avec l'une ou plusieurs des stations ( A1, A2, ...A6 ) de base du réseau radioélectrique.

6. Procédé suivant la revendication 5, dans lequel on mémorise dans l'unité ( S ) centrale des informations se rapportant aux communications radioélectriques entre les stations ( A1, A2, ...A6 ) de base entre elles et entre la station ( 2 ) mobile et la ou les stations ( A1, A2, ...A6 ) de base dans la portée de la station ( 2 ) mobile, notamment les canaux des communications radioélectriques utilisées.

7. Procédé suivant l'une des revendications précédentes, dans lequel on utilise le procédé dans un système de circulation, dans lequel la station ( 2 ) mobile représente un moyen de circulation se déplaçant sur une voie de circulation ayant une ou plusieurs antennes ( 3, 4 ) de communication avec le réseau radioélectrique et les stations ( A1, A2, ...A6 ) de base sont placées à des intervalles le long de la voie de circulation.

8. Procédé suivant la revendication 7, dans lequel le système de circulation est un système de circulation ferroviaire, la voie de circulation étant une voie ferroviaire et le moyen de circulation un véhicule ferroviaire, notamment un train.

9. Procédé suivant la revendication 7 ou 8 en combinaison avec la revendication 5 ou 6, dans lequel l'unité ( S ) centrale est une unité de commande du système de circulation.

10. Procédé suivant l'une des revendications précédentes, dans lequel les stations ( A1, A2, ...A6 ) de base constatent par des messages radiodiffusés émis par la station ( 2 ) mobiles si elles se trouvent dans la portée de la station ( 2 ) mobile.

11. Procédé suivant la revendication 10, dans lequel les messages radiodiffusés émis par la station ( 2 ) mobile, par lesquels les stations ( A1, A2, ...A6 ) de base constatent si elles se trouvent dans la portée de la station ( 2 ) mobile, sont des balises et/ou des messages radiodiffusés utilisés pour la transmission de données.

12. Procédé suivant la revendication 10 ou 11, dans lequel les stations ( A1, A2, ...A6 ) de base transmettent dans leurs messages radiodiffusés émis en outre de l'information locale concernant l'environnement de la station ( A1, A2, ...A6 ) de base respective, les informations locales étant transmises de préférence exclusivement par des stations ( A1, A2, ...A6 ) de base dans la portée de la station ( 2 ) mobile.

13. Procédé suivant l'une des revendications précédente, dans lequel les stations ( A1, A2, ...A6 ) de base et la station ( 2 ) mobile émettent et/ou reçoivent sur le même canal radioélectrique.

14. Procédé suivant l'une des revendications précédente, dans lequel au moins une partie des stations ( A1, A2, ...A6 ) de base a en outre des liaisons filaires, des messages radiodiffusés étant acheminés aussi par les liaisons filaires.

15. Procédé suivant l'une des revendications précédente, dans lequel on utilise un procédé network-coding pour la transmission de données.

16. Réseau radioélectrique suivant l'une des revendications précédentes, qui est conformé pour effectuer un procédé suivant l'une des revendications 2 à 15 dans le réseau radioélectrique.
